# EUROPÄISCHE PATENTANMELDUNG

(11) **EP 1 319 487 A2**
(43) Veröffentlichungstag der Anmeldung: **18.06.2003**
(21) Anmeldenummer: 02026816.5
(22) Anmeldetag: 28.11.2002
(51) Int. Cl.: B28D 1/30, B28D 1/04, B28D 1/06, B28D 1/22, B28D 1/24

(54) **Elektrische Schneidvorrichtung, insbesondere für Kurvenschnitte im Trocken- oder Nass-Schnittverfahren für Fliesen, Naturstein, Kunststein, Betonplatten u.dgl**

(30) Priorität: 12.12.2001 DE 20120126 U
(71) Anmelder: EM-DS Solutions Lizenzverwertung OHG, 88250 Weingarten (DE)
(72) Erfinder: Erich Müller, 88250 Weingarten (DE); Daniel Schmid, 71116 Gärtringen-Rohrau (DE)
(74) Vertreter: Kern, Wolfgang

(57) **Zusammenfassung**

Elektrische Schneidvorrichtung, insbesondere für Kurvenschnitte im Trocken- oder Nass-Schnittverfahren für Fliesen, Naturstein, Kunststein, Betonplatten u.dgl., mit einem Winkelschleifer (Flex), versehen mit einer an das zu schneidende Material angepassten Trennscheibe, oder einer Stichsäge als Schneidorgan oder einem Motor mit Trennscheibe und mit einer tischartigen Materialunterlage sowie wahlweise einem Wasseraufnahmebehälter und einer Wasserzufuhreinrichtung für das Schneidorgan.

Da die Herstellung gebogener oder gekrümmter Schnitte bisher nur mit für derartige Zwecke speziell geeigneten bzw. ausgestatteten Schneidvorrichtungen oder mittels an derartigen Vorrichtungen angebrachter Schablonen möglich gewesen ist, wird zur Vereinfachung und insbesondere Verringerung des Kostenaufwands vorgeschlagen, dass die Schneidvorrichtung (1, 2, 3) auf einer insbesondere gebogenen Laufschiene (4) und/oder Führungsschiene (34) und/oder Kurvenschablone am Ende eines um einen Drehpunkt zirkelartig verschwenkbaren Arms (5, 7) verfahrbar bzw. verstellbar angebracht ist, wobei der Schnittwinkel frei einstellbar ist.

## Beschreibung

Die Erfindung betrifft eine elektrische Schneidvorrichtung, insbesondere für Kurvenschnitte im Trocken- oder Nass-Schnittverfahren für Fliesen, Naturstein, Kunststein, Betonplatten u.dgl., mit einem Winkelschleifer (Flex), versehen mit einer an das zu schneidende Material angepassten Trennscheibe, oder einer Stichsäge als Schneidorgan oder einem Motor mit Trennscheibe und mit einer tischartigen Materialunterlage sowie wahlweise einem Wasseraufnahmebehälter und einer Wasserzufuhreinrichtung für das Schneidorgan.

Derartige bekannte Schneidvorrichtungen werden gewöhnlich zur Herstellung gerader Schnitte in dem zu schneidenden bzw. zu trennenden Material verwendet. Die Herstellung gebogener oder gekrümmter Schnitte ist bisher nur mit für derartige Zwecke speziell geeigneten bzw. ausgestatteten Schneidvorrichtungen möglich gewesen bzw. mit Hilfe von an derartigen Vorrichtungen angebrachter Schablonen und damit relativ kostenaufwendig. Darüber hinaus waren derartigen Kurvenschnitten im Hinblick auf die Dicke der zu schneidenden Materialien enge Grenzen gesetzt.

Die Aufgabe der Erfindung besteht somit darin, Schneidvorrichtungen der genannten Art so weiterzubilden, dass mit ihnen an sich beliebige Kurvenschnitte im Trocken- oder Nass- Schnittverfahren unter Zuhilfenahme bekannter Werkzeuge wie Winkelschleifer, Stichsägen und motorgetriebener Trennscheiben herstellbar sind, wobei sowohl der Art des zu bearbeitenden Materials als auch dessen Dicke und damit der Schnitt-Tiefe keine engen Grenzen gesetzt sind.

Diese Aufgabe wird erfindungsgemäss dadurch gelöst, dass die Schneidvorrichtung auf einer insbesondere gebogenen Laufschiene und/oder Führungsschiene und/oder Kurvenschablone und am Ende eines um einen Drehpunkt zirkelartig verschwenkbaren Arms verfahrbar bzw. verstellbar angebracht ist, wobei der Schnittwinkel frei einstellbar ist.

Das Einsatzgebiet der oben erläuterten technischen Erfindung ist im Zusammenhang mit allen gängigen Nass- und Trockenschneidmaschien zu sehen, die derzeit zum Schneiden bzw. Bearbeiten von Naturstein, Kunststein, Keramikas, Betonplatten u.dgl. Verwendung finden.

Gemäss vorteilhafter Ausgestaltungen des Erfindungsvorschlags lässt sich die Trennscheibe bzw. das Sägeblatt um eine senkrecht zur Materialoberfläche, beispielsweise Fliesenoberfläche, verlaufende Achse verschwenkbar anordnen.

Darüber hinaus kann der zirkelartig verschwenkbare Arm jeder Trennscheibe bzw. des Sägeblatts nicht nur um die Drehachse horizontal verschwenkbar sein, sondern sich auch über der Materialoberfläche, insbesondere Fliesenoberfläche, bezüglich seiner Neigung zu dieser Oberfläche verstellen lassen.

Des weiteren hat sich bewährt, die Lauf- und Führungsschiene hinsichtlich ihrer Krümmung und/oder ihres Abstandes von der Materialoberfläche, insbesondere Fliesenoberfläche, einstellbar auszubilden und die tischartige Materialunterlage in bezug auf die zu bearbeitende Oberfläche horizontal und/oder senkrecht beweglich zu machen. Weitere vorteilhafte Ausgestaltungen der Erfindung sind den Unteransprüchen zu entnehmen.

Das Arbeitsprinzip der erfindungsgemässen Vorrichtung bei Verwendung aller genannter gängiger Werkzeuge beruht darauf, dass das Schneid- oder Trennelement, also das Sägeblatt oder die Trennscheibe zunächst in bezug auf die zu bearbeitende Oberfläche schräg eingestellt werden, um während der Herstellung des Schnittes in die senkrechte Lage überzugehen. Dadurch wird am Anfang ein relativ breiter Schnitt in der Materialoberfläche erzeugt, der mit zunehmender Annäherung des Sägeblattes bzw. der Trennscheibe an die senkrechte Lage immer schmaler wird, wodurch die gewünschten Kurvenschnitte selbst in relativ dicken Materialien hergestellt werden können.

Die Erfindung wird nachfolgend an Hand der in der Zeichnung dargestellten Ausführungsbeispiele näher erläutert. In der Zeichnung zeigen:
- Fig. 1: eine schematische, perspektivische Draufsicht einer elektrischen Schneidvorrichtung, bei der auf einem zirkelartig verschwenkbaren Arm ein Schneidwerkzeug in Form einer Flex, Stichsäge o.dgl. über der zu bearbeitenden Materialoberfläche beweglich angeordnet ist,
- Fig. 2: eine schematische Seitenansicht der Werkzeughalterung von Fig. 1 in einem grösseren Maßstab,
- Fig. 3: eine schematische Seitenansicht der Werkzeughalterung von Fig. 2 ohne zirkelartig verschwenkbaren Arm,
- Fig. 4: eine Stirnansicht der Vorrichtung von Fig. 3,
- Fig. 5: eine schematische perspektivische Draufsicht einer Trockenschneidvorrichtung mit gebogener Führungsschiene,
- Fig. 6: eine schematische Detaildarstellung der Werkzeugbefestigung an der quer zur Materialoberfläche verfahrbaren Laufschiene von Fig. 5 in einem grösseren Maßstab,
- Fig. 7: eine der Fig. 6 vergleichbare Darstellung der Konstruktion für den Einsatz eines Motors mit Trennscheibe,
- Fig. 8: eine der Fig. 5 vergleichbare schematische perspektivische Darstellung einer Schneidvorrichtung, jedoch ausgestattet mit Wasserauffangwanne für das Nass-Schneiden,
- Fig. 9: eine schematische perspektivische Draufsicht einer Nass-Schneidvorrichtung mit Laufschiene für das Werkzeug und gebogener Führungsbahn für Kurvenschnitte,
- Fig. 10: eine teilweise geschnittene Detailansicht der Vorrichtung von Fig. 9 mit dem schematisch dargestellten Schneidwerkzeug, verfahrbar auf einer Laufschiene und geführt an der gebogenen Führungsschiene oder Kurvenschablone,
- Fig. 11: eine der Fig. 10 vergleichbare Seitenansicht der Laufschiene,
- Fig. 12: eine der Fig. 9 vergleichbare schematische, perspektivische Draufsicht einer anderen Ausführungsform der Schneidvorrichtung,

- Fig. 13: eine Detailansicht der Werkzeughalterung und Führung an einer Führungsschiene in einem grösseren Maßstab und
- Fig. 14: eine Draufsicht der Darstellung von Fig. 13 mit gebogener Führungsschiene bzw. Schablone und an dieser seitlich mittels Rollen geführter Werkzeughalterung.

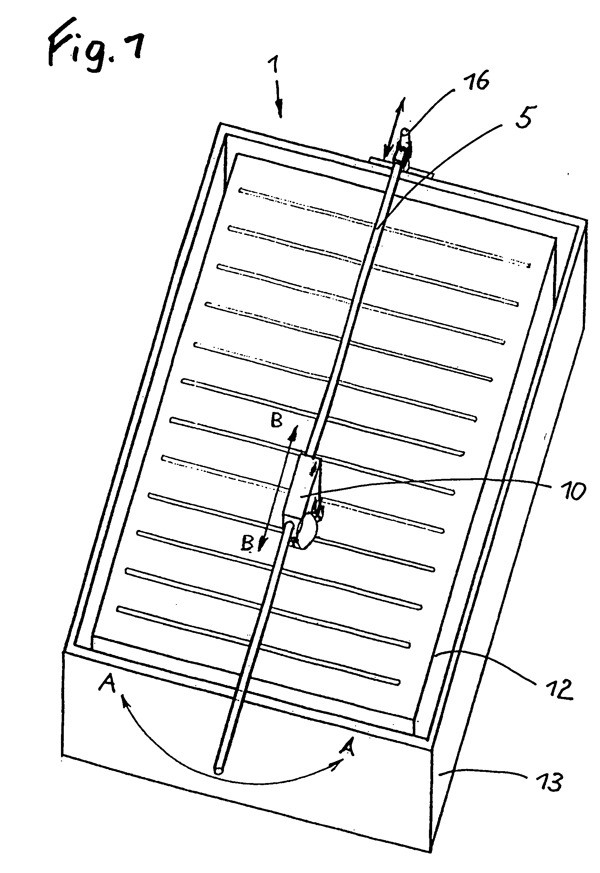

Die in Fig. 1 dargestellte Schneidvorrichtung 1 für Naturstein, Kunststein, Keramikas, Betonplatten u.dgl. ist zum Nass-Schneiden der genannten Materialien geeignet und weist zu diesem Zweck einen Wasseraufnahmebehälter 13 mit Wasserzufuhreinrichtung für das Schneidorgan auf, in dem eine tischartige Materialunterlage 12 angeordnet ist, die das zu schneidende bzw. das zu trennende Material aufnimmt. Über der zu schneidenden Oberfläche ist ein zirkelartig um eine Halterung oder Fußpunkt 16 in Richtung der Pfeile A-A verschwenkbarer Arm 5 angebracht, auf dem das Schneidwerkzeug in Form eines Winkelschleifers 10 in Armlängsrichtung, also in Richtung der Pfeile B-B, über der Materialoberfläche zur Herstellung des gewünschten Schnittes verschiebbar ist.

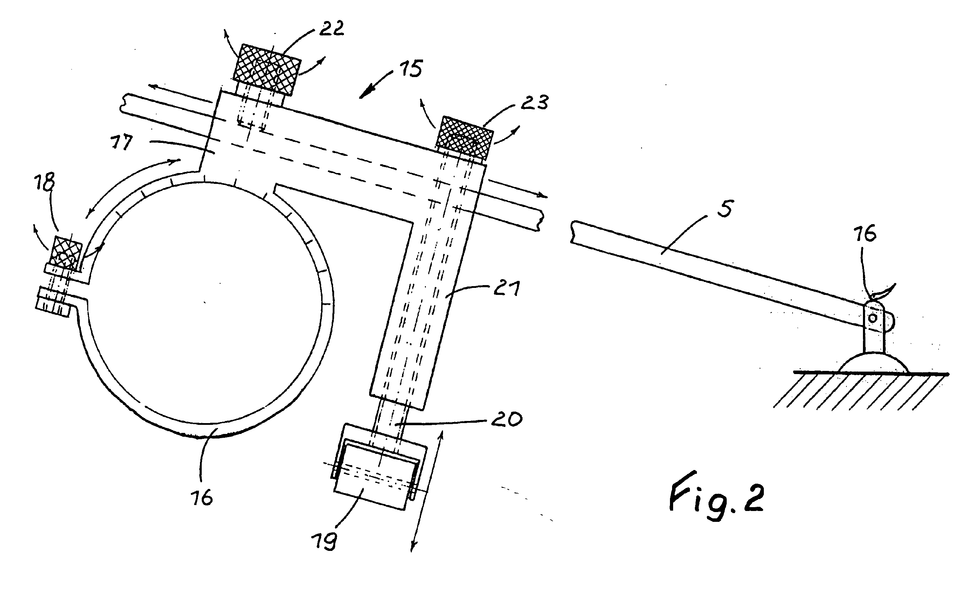

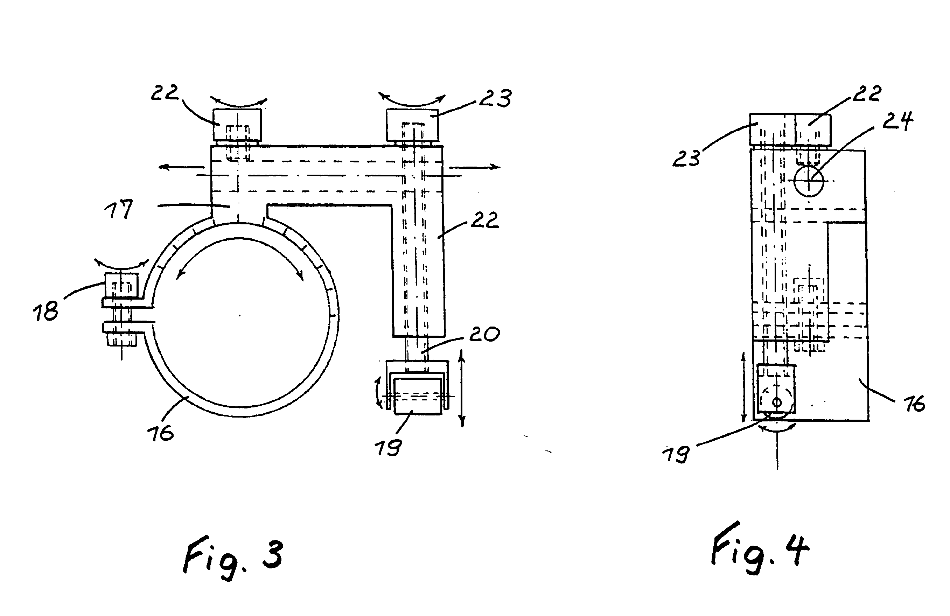

Die Werkzeughalterung 15 des Winkelschleifers 10 ist in Fig. 2 mit ihrem zirkelartig verschwenkbaren Arm 5 vergrössert dargestellt. Sie weist einen das Werkzeug halternden Spannring 16 auf, der mit Hilfe einer Verschraubung 18 die Werkzeugoberfläche umgreift und an einem Galgen 17 angebracht ist, der mit Hilfe eines über eine Laufrolle 19 verstellbaren Fusses 20 mit dem Arm 5 um die Halterung 16 drehbar ist. Dadurch, dass die Rolle 16 in einer Hülse 21 höhenverstellbar angebracht ist, lässt sie sich in bezug auf die zu bearbeitende Materialoberfläche justieren, so dass die Trennscheibe des nicht dargestellten Winkelschleifers (Flex) in der gewünschten Weise mit der Materialoberfläche in Berührung tritt, um den gewünschten Schnitt herzustellen. Der Galgen 17 ist seinerseits auf dem Arm 5 mittels einer Feststellschraube 22 feststellbar. In Fig. 3 ist nochmals der Galgen 17 von Fig. 2 mit dem Werkzeugmaschinenspannring 16 und der höhenverstellbaren Laufrolle 19 dargestellt. Die eingestellte Höhe der Laufrolle wird mittels Stellschraube 23 am Galgen 17 festgelegt. Aus Fig. 4 ergibt sich die Breite des Spannrings 16 sowie des Galgens 17 und die Lage der Bohrung 24, durch die sich der Arm 5 erstreckt.

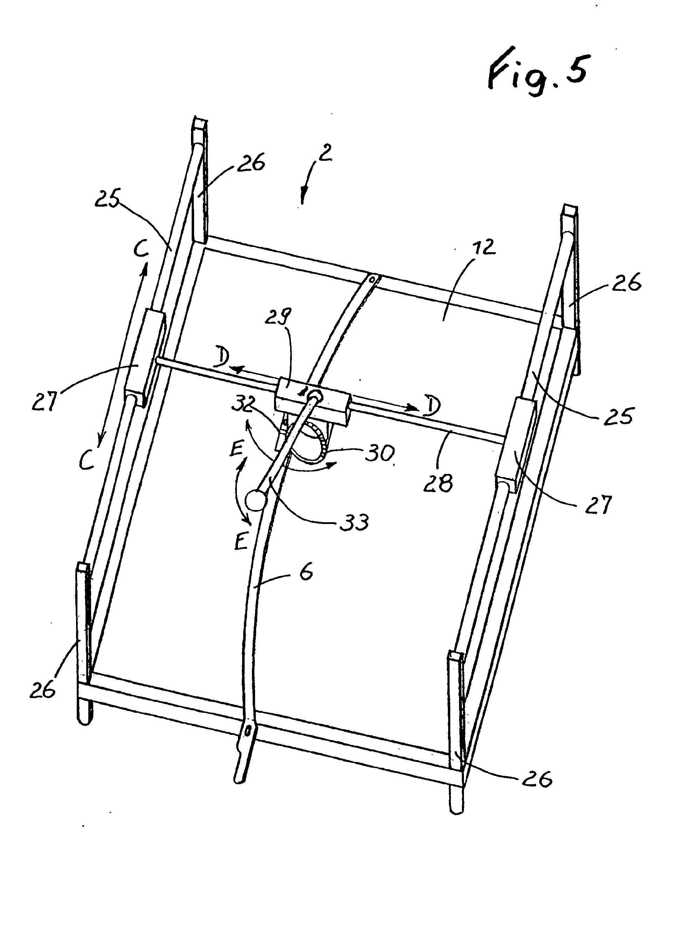

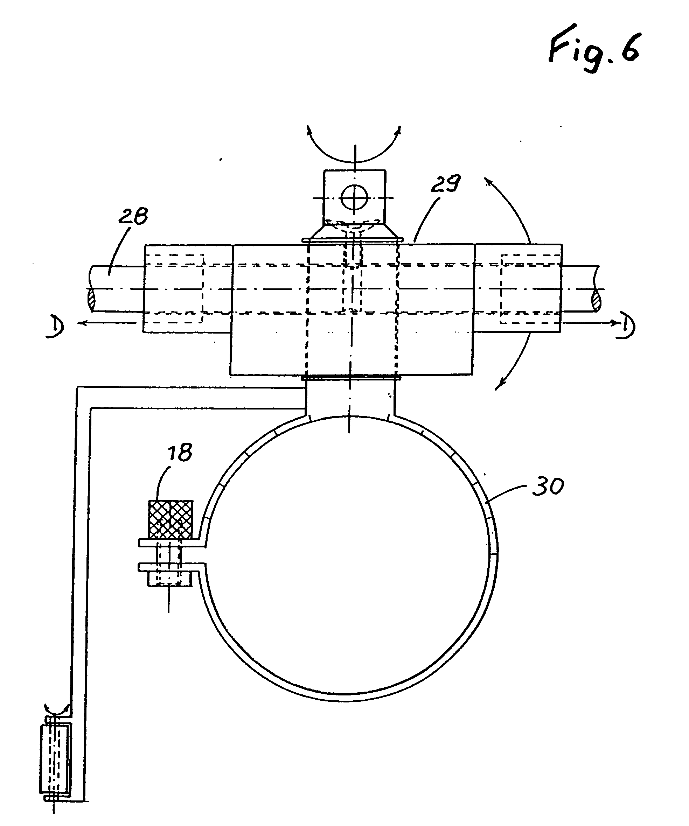

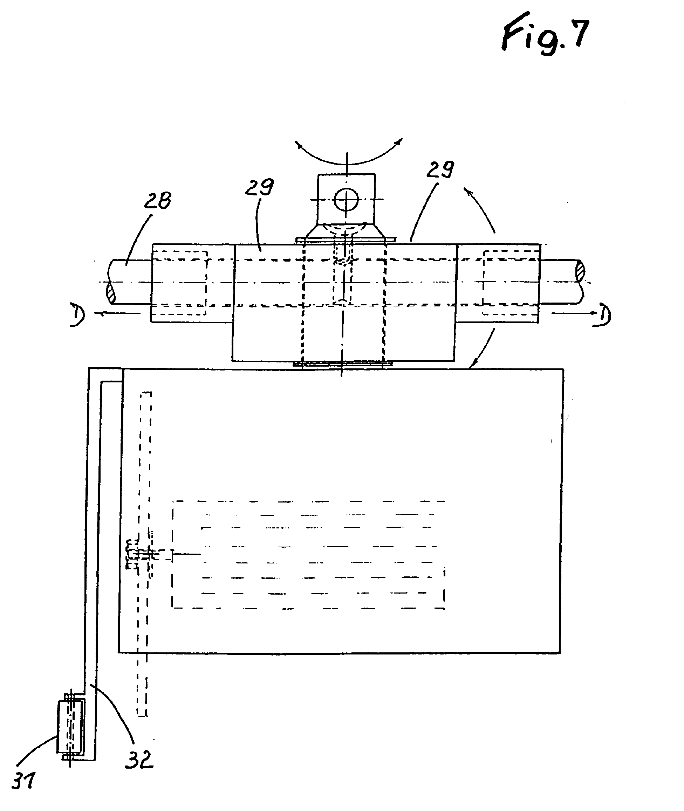

Die in Fig. 5 gezeigte Vorrichtung 2 lässt sich für das Trockenschneidverfahren verwenden, weist also keinen Wasseraufnahmebehälter auf. Die tischartige Materialunterlage 12 dient zur Aufnahme des zu schneidenden Materials. Über ihr ist an zwei parallelen Stangen 25, die über der Materialunterlage 12 an deren vier Ecken mittels Ständer 26 aufgeständert sind, je eine in Richtung der Längsachse der Stangen 25 verfahrbare Führungshülse 27 gelagert. Beide Führungshülsen sind durch eine Laufschiene 28 für einen Werkzeugschlitten 29 verbunden, der zwischen den Führungshülsen 27 auf der Laufschiene in Richtung der Pfeile D-D verfahrbar ist und mittels eines Spannrings 30, wie aus den Fig. 6 und 7 ersichtlich, das dem Spannring 16 der Figuren 2 und 3 ähnlich ist, ein Schneidwerkzeug aufnehmen kann, das mit Hilfe einer Spannschraube 18 im Ring befestigt wird.

Der Schlitten 29 hat einen mit einer Führungsrolle 31 versehenen Fuß 32, die an einer Führungsschiene 6 oder Schablone anliegt, welche eine Krümmung aufweist, die der Krümmung des im Material herzustellenden Schnittes entspricht. Somit kann der Werkzeugschlitten 29 zusammen mit dem Spannring und dem in diesem festgespannten Werkzeug, also beispielsweise einer Flex, in Richtung des Pfeiles E-E in Fig. 5 und damit im wesentlichen in Richtung der Stangen 25 und somit des Pfeiles C-C verfahren werden, um bei laufendem Schneidwerkzeug den gewünschten Kurvenschnitt zu erzeugen. Zur leichteren Handhabung ist der Schlitten 29 mit einem Handgriff 33 ausgestattet, mit dem er über die Werkstückoberfläche auf der tischartigen Unterlage 12 hinweggeführt werden kann.

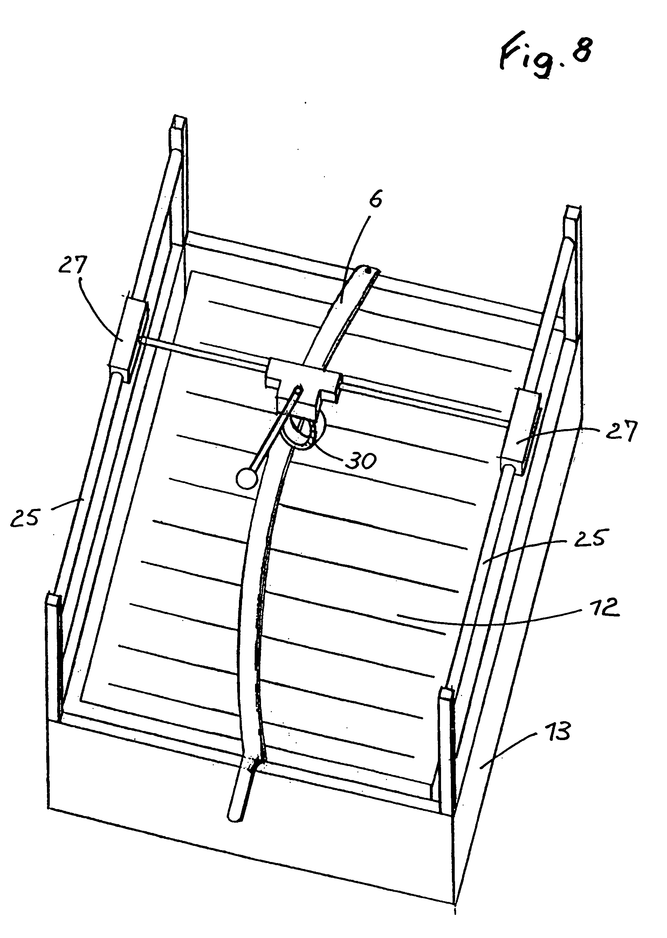

Die in Fig. 8 dargestellte Vorrichtung ist in ihrem Aufbau der Vorrichtung von Fig. 5 ähnlich, jedoch mit einem Wasseraufnahmebehälter 13 versehen, so dass mit ihr Nass-Schnitte durchgeführt werden können.

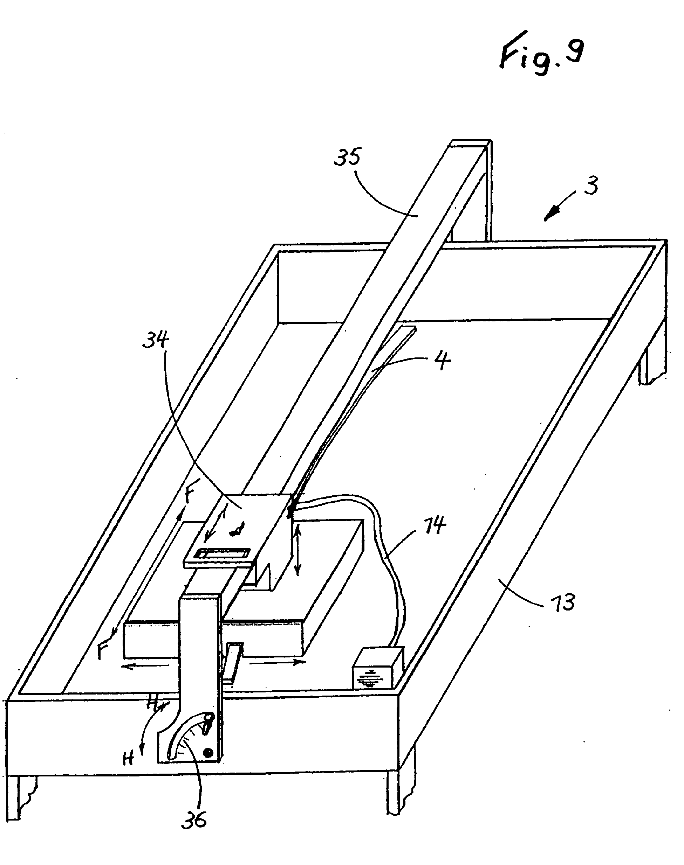

Die in Fig. 9 gezeigte Schneidvorrichtung 3 weist ebenfalls einen Wasseraufnahmebehälter 13 und eine Wasserzufuhreinrichtung 14 auf. Letztere ist mit dem Schneidwerkzeug 34 verbunden, beispielsweise einer Stichsäge, die auf einer Laufschiene, deren beide Enden an den Stirnseiten des Wasseraufnahmebehälters 13 aufgeständert sind, längsbeweglich, also in Richtung des Pfeils F-F gelagert ist, und zwar zusammen mit der tischartigen Materialunterlage 12, die auf ihrer Oberfläche das zu bearbeitende Material, also beispielsweise die zu schneidende Fliese, aufnimmt und ihrerseits an ihrer Unterseite in einer gebogenen Laufschiene 7 geführt wird, deren Krümmung des herzustellenden Kurvenschnittes angepasst ist.

Darüber hinaus ist die Laufschiene 35 in Richtung der Pfeile H-H verschwenkbar, so dass sich der Winkel an Hand der Skala 36 im Bereich der Pfeile H-H einstellen lässt, indem die Laufschiene 35 und damit das Werkzeug zur Oberfläche des zu bearbeitenden Materials geneigt ist.

Die Führungsschiene 4 stellt eine Kreisschablone dar und ist entweder einstellbar oder festgelegt. Diese Kreisschablone kann auch als variable Schablone ausgebildet und für alle genannten Anwendungsmöglichkeiten einsetzbar sein. Die Längsbeweglichkeit des Tisches bzw. der tischartigen Materialunterlage 12 stellt sicher, dass letzterer an der Schablone 4 in der gewünschten Weise verfahren wird, wobei allerdings auch das Werkzeug, so beispielsweise eine motorgetriebene Diamantscheibe, über der Tischoberfläche verfahren kann, während der Tisch 12 festgelegt wird.

Somit bestehen zwei Bewegungsmöglichkeiten bei der Herstellung des gewünschten Schnittes, insbesondere Kurvenschnittes, nämlich zum einen die Bewegung des Tisches 12 bei festgelegtem Werkzeug und zum anderen die Bewegung des Werkzeugs bei festgelegtem Tisch. Mit dieser Vorrichtung lassen sich also insbesondere Rundschnitte im Nass-Schnittverfahren herstellen.

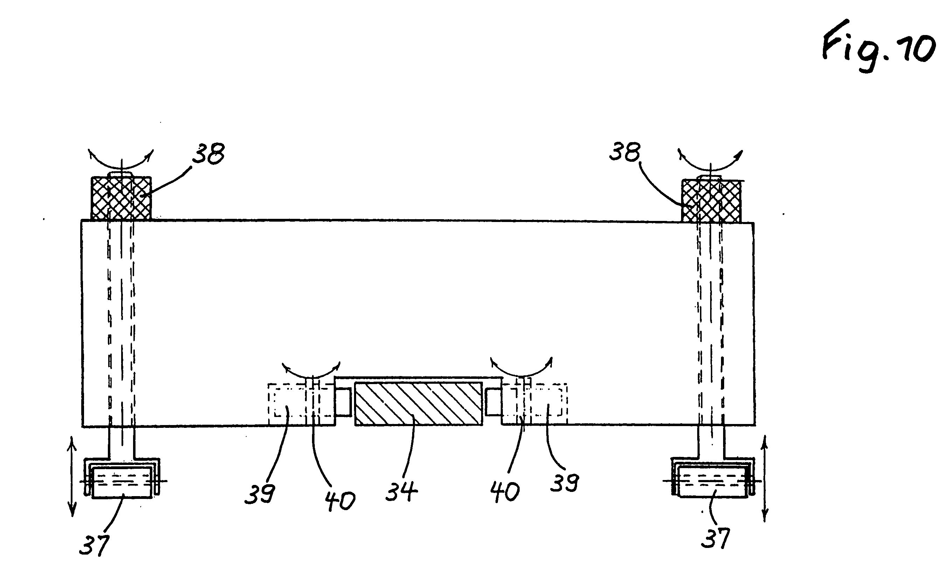

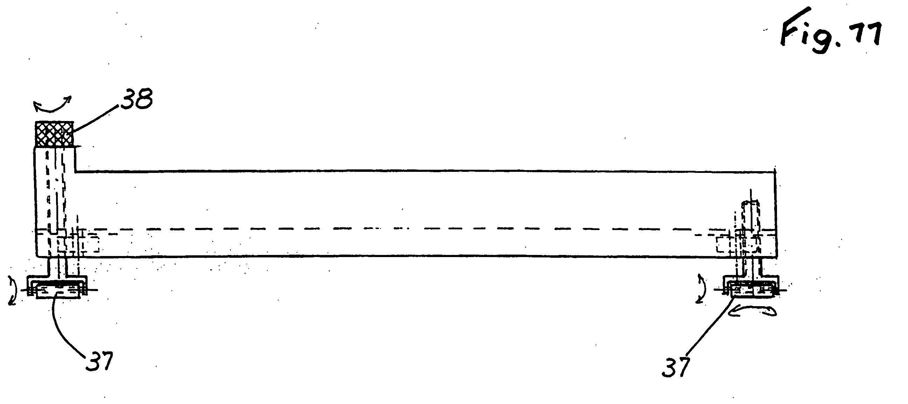

Figur 10 zeigt in einer vergrösserten Detaildarstellung die Führung des Bearbeitungswerkzeuges an der Schablone 34 mit Hilfe auf der nicht dargestellten tischartigen Materialunterlage 12 (Fig. 9) aufliegender Rollen 37, wobei das Werkzeug, also das Schneidorgan, mit Hilfe von Stellmuttern 38, die auf das Werzeug durchgreifenden Schrauben sitzen, in seinem Abstand von der Tischoberfläche einstellbar ist. Die seitliche Führung des Werkzeuges an der Schablone 34 erfolgt zweckmässigerweise mittels Rollen 39, die auf in dem Werkzeug angeordneten Achsen 40 drehbar gelagert sind. Eine vergleichbare Anordnung ist in Fig. 11 dargestellt. Auch diese dient dazu, das Werkzeug bzw. den dieses aufnehmenden Tisch in einem einstellbaren Abstand von der Schneid- bzw. Bearbeitungsoberfläche zu halten.

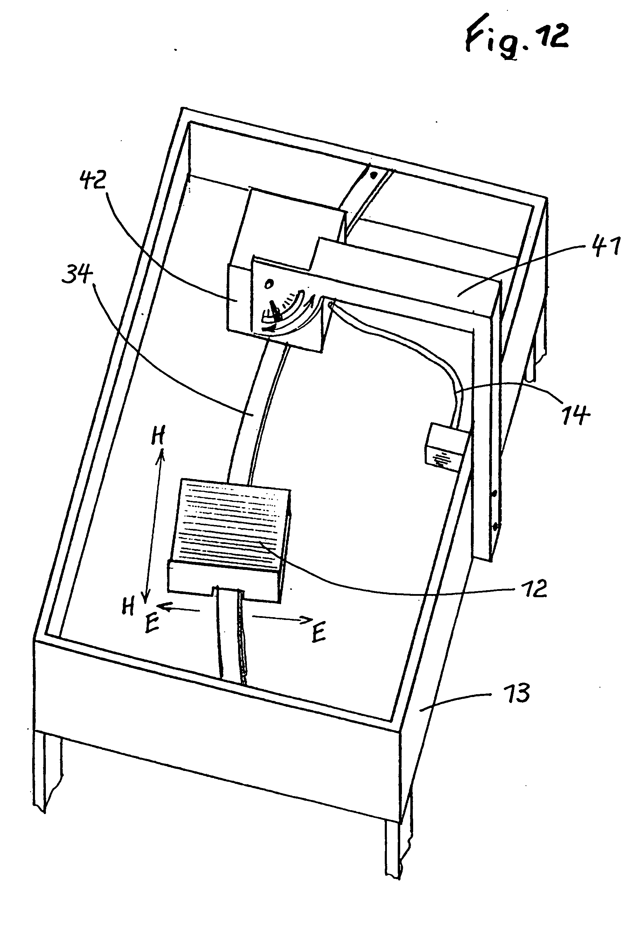

Die in Fig. 12 dargestellte Schneidvorrichtung ist wiederum mit einem Wasseraufnahmebehälter 13 versehen, dient also zum Nass-Schneiden und ist in ihrem wesentlichen Aufbau mit der Vorrichtung von Fig. 9 vergleichbar, wobei allerdings die Führungsschiene 35 beidseitig des Wasseraufnahmebehälters 13 im Winkel verstellbar gelagert ist. Diese Vorrichtung ist gemäss Fig. 12 durch einen Galgen 41 ersetzt, auf dessen über der tischartigen Materialunterlage befindlichem Ende das hinsichtlich seines Neigungswinkels einstellbare Schneidwerkzeug, also beispielsweise eine Flex oder eine Trennscheibe, wie bei 42 schematisch gezeigt, angeordnet ist. Der das zu schneidende Material aufnehmende Tisch 12 ist auf der Schablone 34 entlang letzterer verschiebbar gelagert, wie durch die Pfeile H-H und I-I angedeutet.

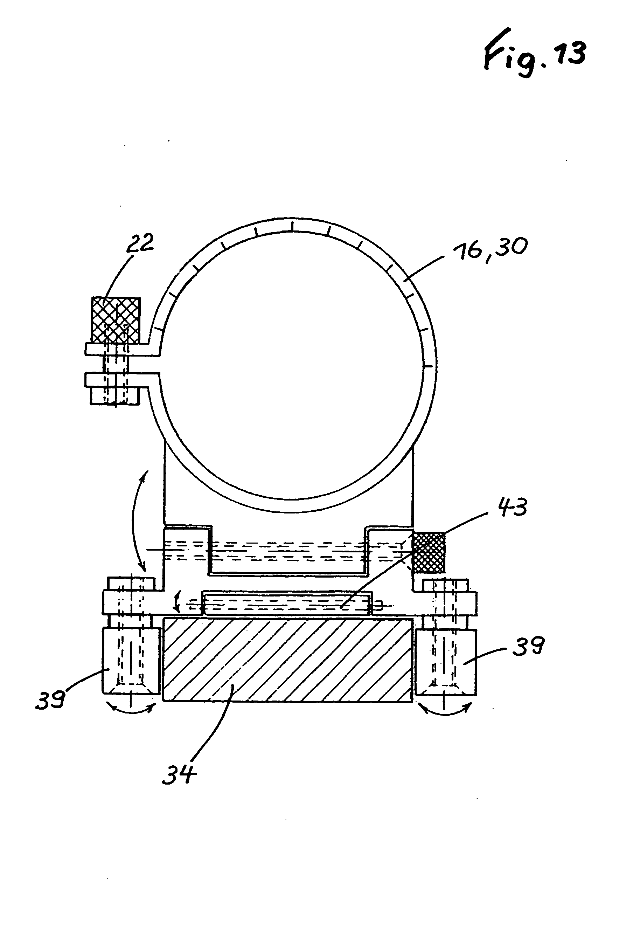

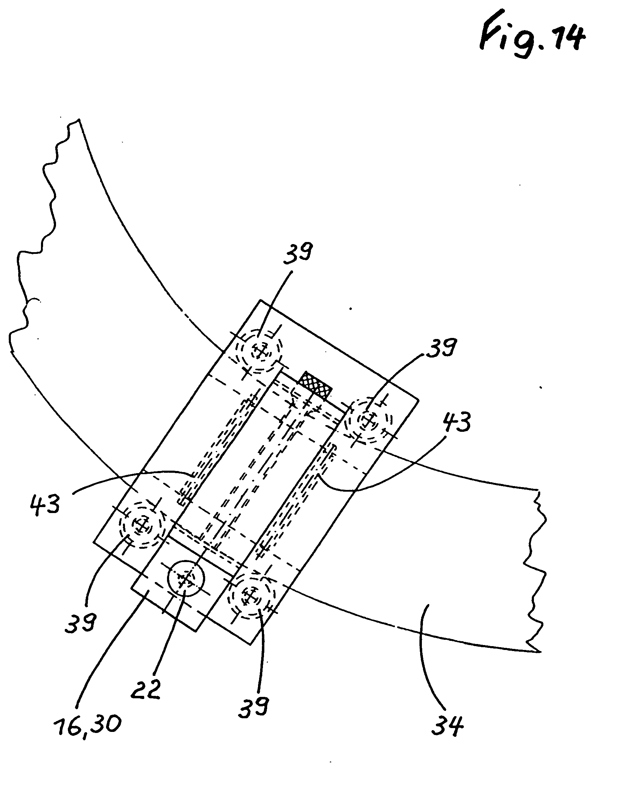

Zur Demonstration der Lagerung des Werkzeuges, das in einem Spannring 16 oder 30 der oben beschriebenen Art angeordnet ist, in bezug auf die Oberfläche der gebogenen Laufschiene oder Schablone 34 dienen die Darstellungen der Figuren 13 und 14, aus denen ersichtlich ist, dass das Werkzeug bzw. sein Spannring sowohl seitlich mittels Laufrollen 39, wie bereits in Fig. 10 gezeigt, als auch bezüglich seines Höhenabstandes und seiner Lagerung auf der Oberseite der Schablone mit Hilfe wenigstens einer Laufrolle 43 eine präzise Abrollbewegung ausführen kann, die sicherstellt, dass der herzustellende gebogene oder Kurvenschnitt nicht nur hinsichtlich seines seitlichen Verlaufes, sondern auch seiner Tiefe den gewünschten Anforderungen entspricht.

Somit schafft die Erfindung eine Möglichkeit, selbst komplizierteste Schnitte in den genannten Materialien präzise mit Hilfe von bereits jetzt bekannten Maschinen und Apparaten herzustellen, ohne dass jeweils neue Schneidvorrichtungen geschaffen werden müssen, wobei die Schnittführung hinsichtlich Präzision und die Schnittabmessungen den verlangten Anforderungen entsprechen.

Zur Herstellung von Trockenschnitten dient dabei ein Winkelschleifer, auch Flex genannt, versehen mit spezieller Diamanttrennscheibe, die an das zu schneidende Material angepasst ist, oder eine Stichsäge mit speziellem Sägeblatt, die in eine besondere Vorrichtung eingebaut wird, beispielsweise eine Spannvorrichtung der oben beschriebenen Art, die die Einstellung gewünschter Radien ermöglicht, um die gewünschten Kurven zu schneiden.

## Patentansprüche

**1.** Elektrische Schneidvorrichtung, insbesondere für Kurvenschnitte im Trocken- oder Nass- Schnittverfahren für Fliesen, Naturstein, Kunststein, Betonplatten u.dgl., mit einem Winkelschleifer (10) (Flex), versehen mit einer an das zu schneidende Material angepassten Trennscheibe (8) oder einer Stichsäge als Schneidorgan oder einem Motor mit Trennscheibe und mit einer tischartigen Materialunterlage (12) sowie wahlweise einem Wasseraufnahmebehälter (13) und einer Wasserzufuhreinrichtung (14) für das Schneidorgan, **dadurch gekennzeichnet, dass** die Schneidvorrichtung (1, 2, 3) auf einer insbesondere gebogenen Laufschiene (4) und/oder Führungsschiene (34) und/oder Kurvenschablone am Ende eines um einen Drehpunkt zirkelartig verschwenkbaren Arms (5, 7) verfahrbar bzw. verstellbar angebracht ist, wobei der Schnittwinkel frei einstellbar ist.

**2.** Schneidvorrichtung nach Anspruch 1, **dadurch gekennzeichnet, dass** die Trennscheibe (8) des Winkelschleifers (10) bzw. Rotors oder das Sägeblatt der Stichsäge um eine senkrecht zur Materialoberfläche (9) verlaufende Achse verschwenkbar ist.

**3.** Schneidvorrichtung nach Anspruch 1 oder 2, **dadurch gekennzeichnet, dass** der zirkelartige Arm (19) mit der Trennscheibe (8) bzw. dem Sägeblatt nicht nur um die Drehachse horizontal verschwenkbar, sondern auch über der Materialoberfläche (9) in der Neigung verstellbar ist.

**4.** Schneidvorrichtung nach einem der Ansprüche 1 - 3, **dadurch gekennzeichnet, dass** die Lauf- und Führungsschiene (4, 6) hinsichtlich ihrer Krümmung und/oder ihres Abstandes in Bezug auf die Materialoberfläche (9) verstellbar ist.

**5.** Schneidvorrichtung nach einem der Ansprüche 1 - 4, **dadurch gekennzeichnet, dass** die tischartige Materialunterlage (12) in bezug auf die zu bearbeitende Materialoberfläche (9) horizontal und/oder schräg und/oder senkrecht beweglich ist.

**6.** Schneidvorrichtung nach einem der Ansprüche 1 - 5, **dadurch gekennzeichnet, dass** die Lauf- und Führungsschiene (4, 6) für den Winkelschleifer (10) bzw. die Stichsäge um eine senkrechte Achse verschwenkbar ist.

**8.** Schneidvorrichtung nach einem der Ansprüche 1 - 6, **dadurch gekennzeichnet, dass** die tischartige Materialunterlage (12) um eine senkrechte Achse kippbar ist.

**9.** Schneidvorrichtung nach einem der Ansprüche 1 - 8, **dadurch gekennzeichnet, dass** die Lauf- und Führungsschine (4, 6) um eine senkrechte Achse kippbar ist.
